# EUROPEAN PATENT APPLICATION

(11) **EP 3 506 640 A1**
(43) Date of publication of application: **03.07.2019**
(21) Application number: 18248184.6
(22) Date of filing: 28.12.2018
(51) Int. Cl.: H04N 21/218, H04N 21/222, H04N 21/231, H04N 21/234, H04N 21/2343, H04N 21/235, H04N 21/24, H04N 19/154, H04N 19/196, H04N 19/15

(54) **CONTENT-AWARE PREDICTIVE BITRATE LADDER**

(30) Priority: 28.12.2017 US 201762611304 P
(71) Applicant: Comcast Cable Communications, LLC, Philadelphia, PA 19103 (US)
(72) Inventor: MAO, Weidong, Philadelphia, PA 19103 (US); GILADI, Alexander, Philadelphia, PA 19103 (US); BALK, Alex, Philadelphia, PA 19103 (US)
(74) Representative: V.O.

(57) **Abstract**

Methods, systems, and apparatuses may encode a media content item based on metadata from previous encoding. The encoding may also generate encoding metadata, which may comprise a qualitative or quantitative characterization of the encoded media content item. A prediction engine may, based on this metadata, determine new encoding settings for the same or a different video resolution. The prediction engine may cause an encoded media content item to be stored and may cause encoding of the media content item using the new encoding settings. These operations may be repeated for any number of encoded versions of the media content item.

## Description

### BACKGROUND

Adaptive streaming technologies allow content providers to deliver the same media content in a variety of formats, such as in different video resolutions and/or bitrates. Content providers may encode and store the same media content in a variety of formats. One approach to generating such a variety of formats is content-aware encoding, which analyzes portions of content (e.g., scenes of a television show) in order to determine appropriate encoding parameters. Content-aware encoding often requires extensive trial encodes using a one-size-fits-all approach in order to determine appropriate encoding parameters. Such processes may be computationally wasteful and time-consuming.

### SUMMARY

The following presents a simplified summary of certain features. This summary is not an extensive overview, and is not intended to identify key or critical elements. The following summary merely introduces certain features in a simplified form as a prelude to the more detailed description.

An improved method of encoding media content may use predictive encoding to obtain multiple versions of media content. Encoders may encode media content items using starting encoding settings. Such starting encoding settings may comprise a low average or maximum bitrate, coded picture buffer (CPB) size, quantization parameter (QP), constant rate factor (CRF), resolution, and/or other parameters. That encoding process may generate metadata providing information about the quality of the encoded media content item. This metadata may be sent to a prediction engine, which may determine new encoding settings for the encoders based on the metadata. Such new encoding settings may, for example, predict an optimal bitrate and/or other encoding setting(s) for a different resolution version of the media content item.

These and other features and advantages are described in greater detail below.

### BRIEF DESCRIPTION OF THE DRAWINGS

The present disclosure includes examples shown in, but is not limited by, the accompanying drawing in which like numerals indicate similar elements.
FIG. 1 is an example of a system which encodes media content using encoders and a prediction engine.
FIG. 2 shows an example of a bitrate ladder process.
FIG. 3 is a flow chart showing steps in an example process for encoding media content.
FIG. 4 is a flow chart showing steps in an example process for a prediction engine.
FIG. 5 shows an example communication network.
FIG. 6 shows hardware elements of an example computing device.

### DETAILED DESCRIPTION

In the following description, reference is made to the accompanying drawings, which form a part hereof, and in which are shown examples of various features. It is to be understood that other features may be utilized and structural and functional modifications may be made, without departing from the scope of the present disclosure.

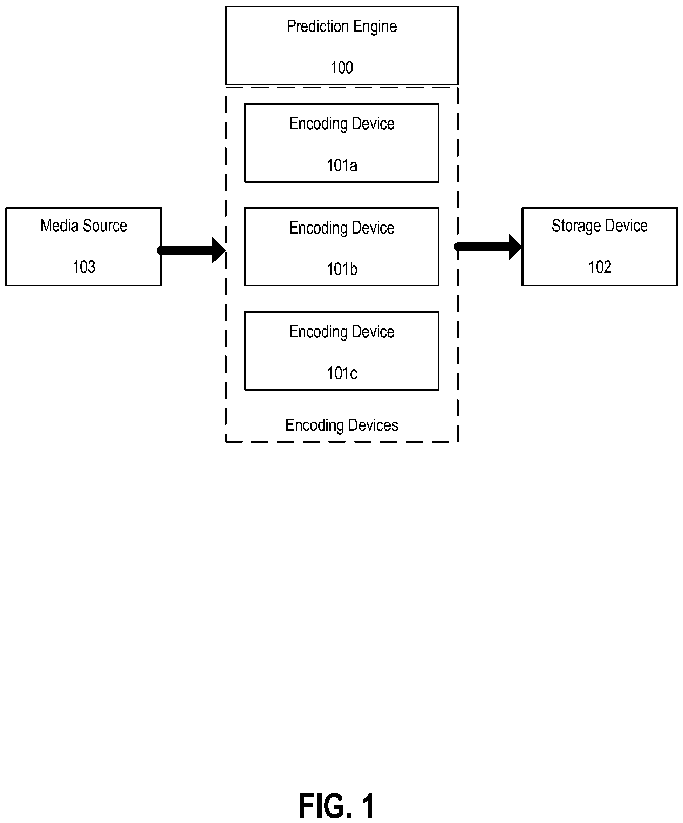

FIG. 1 shows an example content encoding system that includes a prediction engine 100, encoders 101a-101c, a storage device 102, and a media source 103. Media content items from the media source 103 may be encoded by the one or more encoders 101a-101c into different versions of encoded media content items. Those encoded media content items may be stored by the storage device 102. Encoding by the encoders 101a-101c, as well as the decision to store the encoded media content items using the storage device 102, may be managed by the prediction engine 100. The prediction engine 100 may be communicatively coupled to the encoders 101a-101c and may send encoding settings and/or storage instructions to the encoders 101a-101c. The prediction engine 100 may receive metadata from the encoders 101a-101c that corresponds to and/or is generated in connection with the encoded media content items.

Each of the encoders 101a through 101c may be an encoding software program executing on a computing device. For example, each of the encoders 101a-101c may comprise instructions stored in a memory and that, when executed by one or more processors of a computing device, cause that computing device to encode content items using a video encoding standard such as, e.g., MPEG-1, MPEG-2, MPEG-4 AVC, VP8, VP9, AV1, or and/or other encoding standard. Each of the encoders 101a-101c may be executing on a separate computing device, or some or all of the encoders 101a-101c could be executing on a single computing device.

The prediction engine 100 may also be a program executing on a computing device. For example, the prediction engine 100 may comprise instructions stored in a memory that, when executed by one or more processors of a computing device, may cause that computing device to perform one or more of the operations described herein. The prediction engine 100 may execute on the same computing device(s) as one or more of the encoders 101a-101c and/or may execute on one or more separate computing devices. The prediction engine 100 may comprise a plurality of computing devices or logical software elements which together comprise a neural network for analyzing metadata and determining, for example, new encoding settings for the encoders.

The storage device 102 may be one or more computing devices separate from computing devices executing the prediction engine 100 or the encoders 101a-101c. For example, the storage device 102 may be a database server or other type of server. Additionally, or alternatively, the storage device may be part of the computing device(s) that execute one or more of the prediction engine 100 and/or the encoders 101a-101c. Communications between the encoders 101a-101c and the prediction engine 100 may be different based on the configuration of both the encoders 101a-101c and the prediction engine 100. For example, if the prediction engine 100 is executing on a server separate from the encoders 101a-101c, metadata may be sent to the prediction engine 100 via a network protocol, and the prediction engine 100 may transmit instructions to the encoders 101a-101c over the same or a different network protocol. As another example, if the prediction engine 100 and the encoders 101a-101c execute on the same computing device, communications may be facilitated via an operating system.

Media content items sent from the media source 103 to the encoders 101a-101c may be any form or type of content. Examples of content type include video of a movie, video of a television show, video a video game, video for a real-time video feed, and other types of video. A media content item may be of any arbitrary length and/or may be part of a larger media content item (e.g., a five-second segment of a film). A video feed from the media source 103 to the encoders 101a-101c may be in any compressed or uncompressed format. In some examples, a video feed from the media source 103 may be in a raw format, e.g., uncompressed video input via serial digital interface (SDI) or Internet protocol (IP) interface cards or decoded from a file generated at a post-processing facility.

Although three encoders are shown in FIG. 1, more or fewer encoders may be used in other examples. In some examples using multiple encoders, each encoder may be configured to handle the same or different media content items. For example, one encoder may be configured to handle high-bitrate or high-resolution media content items and another encoder may be configured to handle low-bitrate or low-resolution media content items. The encoders 101a-101c may be configured with the same or different encoding software and/or encoding settings. For example, one encoder may be configured to encode high definition video in a first format, whereas another encoder may be configured to encode video for low resolution mobile devices in a second format.

The encoders 101a-101c may, when encoding media content items and creating encoded media content items, also generate metadata corresponding to the encoded media content items. Such metadata may comprise any qualitative or quantitative characterization of the encoded form of the media content item. The metadata may comprise data that suggests an overall quality level of the encoded media content item, such as a peak signal-to-noise ratio (PSNR) value. The metadata may comprise a frame size in bits, an average quantization parameter (QP) or constant rate factor (CRF) value for one or more frames, a percentage of intra- and inter-coded blocks, a frame cost in bits as inter- and intra-coded frame, a histogram of pixel intensities, and/or other data. An encoder may subdivide content (e.g., a frame) into blocks, and the metadata may additionally or alternatively comprise aggregated per-block data, such as an indication of distortion (e.g., pixel-domain and frequency-domain differences between incoming and encoded blocks as corrected for human perception), a quantity of bits spent on encoding motion vectors, coding tree unit information, and/or other data. The metadata may be specific to a particular version of an encoded media content item.

The metadata generated by the encoders 101a-101c may be stored in memory by the encoder and/or sent to the prediction engine 100. The encoders 101a-101c need not send the metadata to the prediction engine 100 for every encode, but may rather store the metadata in memory for multiple encoding processes (e.g., for every 3 encoding processes) and send collected metadata to the prediction engine 100.

The encoders 101a-101c may additionally or alternatively send metadata based on a rule associated with, for example, a media content item, metadata, and/or the encoders 101a-101c. For example, the encoders 101a-101c may be configured to store metadata until an encoding process results in a PSNR value greater than 30 dB, and then to send all stored metadata to the prediction engine 100. As another example, the prediction engine 100 may be configured to instruct the encoders 101a-101c to only send metadata once the metadata reaches a threshold (e.g., a file size and/or a predetermined value). The encoders 101a-101c may send metadata in batches for quickly-performed encoding processes (e.g., encoding at 720x480 progressive (480p)), but may send metadata for every longer encoding process performed (e.g., encoding at 1920x1080 progressive (1080p)) so as to maximize computational efficiency and avoid unnecessary repetition of long encoding processes.

Encoded media content items may be stored on the storage device 102. Any number of storage devices may exist; one is shown in FIG. 1 for simplicity. Storage may comprise moving an encoded media content item from a buffer or other temporary storage to long-term storage (e.g., a hard drive) and/or may comprise transmitting an encoded media content item to a separate computing device on a network.

The prediction engine 100 may be configured to analyze metadata and determine new encoding settings for the encoders 101a-101c, e.g., for a higher resolution version of a media content item. The prediction engine 100 may also be configured to determine whether one or more versions of one or more encoded media content items corresponding to the metadata should be stored (e.g., by the storage device 102). For example, the prediction engine 100 may analyze metadata corresponding to a 480p, 1 megabits per second (Mbps) (480p/1Mbps) version of an encoded media content item and, based on this metadata, one or more rules, storage limitations, and other considerations, may instruct the encoders 101a-101c to encode a 1280x720 progressive (720p) version of the media content item at 10 Mbps (720p/10Mbps) and to store the 480p/1Mbps version of the media content item.

The prediction engine 100 may analyze received metadata, may determine an optimized version of encoded media content items at a certain resolution, and may cause that optimized version of the encoded media content item to be stored. Such an optimized version need not be a version encoded using the highest bitrate or other highest encoding setting. An optimized version may, for example, represent a version having a desirable tradeoff between bitrate (and/or other encoding setting(s)) and quality. Quality may refer to one or more measures of quality-indicating parameters in the metadata that are indicative of whether a viewer will perceive a displayed media content to provide a better or worse experience. Such quality-indicating parameters may include, e.g., whether there are known defects such as banding, blocking, or other noticeable defects; whether there is stopped or uneven motion; and/or a measure of video quality. Measures of video quality include PSNR, structural similarity index (SSIM), SSIMplus (a full reference video QoE measure described, e.g., in A. Rehman, K. Zeng and Z. Wang, "Display device-adapted video quality-of-experience assessment," IS&T-SPIE Electronic Imaging, Human Vision and Electronic Imaging XX, Proc. SPIE, vol. 9394, Feb. 2015), video quality metric (VQM), video multi-method assessment fusion (VMAF), video information fidelity (VIF), high dynamic range video quality metric (HDR-VQM), and high dynamic range visual difference predictor (HDR-VDP). A quality-indicating parameter may apply to a complete picture or may represent various areas within a picture. The prediction engine 100 may use a multitude of quality-indicating parameters.

The optimized version may be determined based on a variety of considerations. For example, an optimized version for a given resolution may be encoded using settings that comprise a minimum bitrate and/or minimum QP and/or CRF values at which quality will reach or exceed a predetermined threshold expressed, e.g., as a value for one of the above-mentioned video quality measures and/or using one or more other quality-indicating parameters. The prediction engine 100 may also send new encoding settings to the encoders 101a-101c. The new encoding settings may be to encode the media content item at a different bitrate (and/or at one or more other different encoding settings) for a resolution at which the item has already been encoded. For example, the quality of the first encode may have been too low. As another example, the prediction engine 100 may predict that encoding the same media content item at a lower bit rate (and/or at one or more other different encoding settings) will not result in significant loss of quality. The new encoding settings may be used to encode the same media content item at a higher resolution and at a bitrate (and/or one or more other encoding settings) predicted from metadata from a lower resolution encoding. Such new encoding settings may reflect prediction, by the prediction engine 100, of encoding settings which may produce the optimized version of the media content item at the higher resolution.

For example, the encoder 101a may encode three different versions of a media content item at a first resolution: a 480p/1 Mbps version, a 480p/1.5 Mbps version, and a 480p/ 2.0 Mbps version, may send metadata for all three encodes to the prediction engine 100, and may receive from the prediction engine 100 an instruction to store the 480p/1.5 Mbps version and to next encode the media content item using new encoding settings for a 720p encode. The instruction to use new encoding settings for a 720p Mbps encode may be based on an analysis of the metadata provided for one or more of the encodes at 480p resolution and yield a prediction of the new encoding settings to be used to produce an optimized version of the media content item at 720p. This process may be repeated for multiple encoding processes to generate and store a plurality of different versions of the encoded media content item. Each successive invocation of the prediction engine 100 (e.g., prediction of optimal settings for a 1080p encode) may use some or all metadata generated by previous encodes, e.g., the 480p encodes, the 720p encode, and any additional 720p encodes.

Prediction of settings is not limited to spatial resolutions. For example, prediction may include prediction of settings for different frame rates (e.g., use of 30000/1001 fps analysis to predict 60000/1001 fps settings), color spaces (e.g., use of standard dynamic range metadata analysis to predict high dynamic range settings), number of bits used to express a pixel value (8-bit analysis used for 10-bit or 12-bit encode settings), or a combination of or one or more of these parameters and spatial resolution. Moreover, prediction may be performed across video coding standards. For example, encoding metadata from an encode using the ITU-T H.264 standard may be used to derive ITU-T H.265 encode settings or vice versa.

The new encoding settings may comprise, for example, a maximum or average bitrate selected from a plurality of possible bitrates, a QP value selected from a plurality of possible QP values, a CRF value selected from a plurality of possible CRF values, and/or a hypothetical reference decoder (HRD) parameter. For example, quality-driven streaming approaches may use combinations such as HRD/bitrate and CRF to produce optimal results. The prediction engine 100 may be configured to target specific bitrate values (e.g., those which may be best transmitted over different network interfaces) and/or specific ranges of values for one or more quality measures. A plurality of possible bitrates and/or other encoding settings may be predetermined and/or based on one or more network interfaces. A plurality of predefined, discrete bitrates and/or other encoding settings may be available for encoding at each of multiple resolutions.

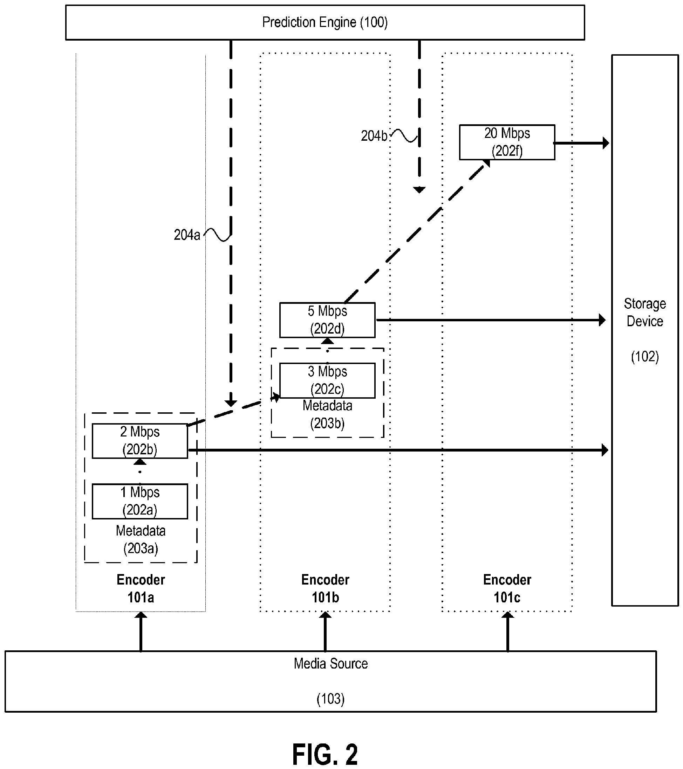

FIG. 2 shows an example encoding process for media content items using the prediction engine 100 and encoders 101a-101c. The example of FIG. 2 depicts three media content resolutions. Encoder 101a may encode at one or more bitrates (and/or other encoding settings) at a resolution of 480p. Encoder 101b may encode at one or more bitrates (and/or other encoding settings) at a resolution of 720p. Encoder 101c may encode at one or more bitrates (and/or other encoding settings) at a resolution of 1080p. Any number or variety of resolutions, bitrates, or other encoding parameters may be used in accordance with the features described herein.

A first encode of a media content item may not be based on instructions from the prediction engine 100 but rather may use starting encoding settings. Starting encoding settings may comprise any encoding settings intended to be used first by a lowest resolution encoder. Though starting encoding settings may be low such that future encoding settings may be larger, starting encoding settings need not comprise the lowest available bitrate or (other encoding setting) at the lowest available resolution. In the example of FIG. 2, the starting encoding settings are 480p at a maximum bitrate of 1 Mbps (e.g., box 202a). The encoders may be configured to use starting encoding settings to encode the media content item and to send corresponding metadata to the prediction engine 100 such that the prediction engine 100 may have a baseline set of metadata. The starting encoding settings may be manually set by an administrator. The prediction engine 100 may additionally or alternatively determine the starting encoding settings based on previous encodes of other media content items. Starting encoding settings may be based on properties of the media content item: for example, television shows may have a first starting encoding setting, and movies may have a second starting encoding setting that is higher than the first starting encoding setting.

As an example, the encoder 101a of FIG. 2 may begin by generating two versions of an encoded media content item at 480p (e.g., boxes 202a-202b), generate corresponding metadata (e.g., box 203a), and send said metadata to the prediction engine 100. The prediction engine 100 may, based on an analysis of the metadata received, instruct (e.g. arrow 204a) the encoder 101a to store the 420p/2.0 Mbps version of the media content item (e.g., the encoded version corresponding to box 202b) in the storage device 102. The prediction engine 100 may also instruct the encoder 101b to next generate an encoded media content item at the next highest resolution and at a bitrate (and/or other encoding setting) predicted based on the received metadata associated with the 420p/2.0 Mbps version (720p/3 Mbps, box 202c). In other words, the prediction engine 100 may use metadata from an optimized 480p encode (and/or non-optimized 480p encode(s)) to predict an optimized bitrate (and/or other encoding setting) for a 720p encoding process. The encoder 101b may then generate a 720p/3 Mbps version of the encoded media content item (block 202c) and create metadata (203b) corresponding to that version of the media content item. Because metadata corresponding to the 720p/3 Mbps version of the encoded media content item (box 203b) may suggest that the 3 Mbps does not provide a target level of quality for 720p (that is, that the prediction engine 100 predicted incorrectly), the prediction engine 100 may instruct (arrow 204b) the encoder 101b to generate a 720p/5 Mbps version of the encoded media content item and/or to adjust other encoding settings. Based on metadata (not shown) associated with that version, the prediction engine may then instruct the encoder 101b to store the 720p/5 Mbps version. Based on metadata from the 720p/5 Mbps version (and/or metadata from the 720p/3 Mbps version and/or one or more of the 480p versions), the prediction engine may then predict 20 Mbps as the optimized bitrate (and/or may predict other encoding settings) for a 1080p version of the media content item and instruct the encoder 101c to generate and store a 1080p/20Mbps version of the encoded media content item (202f) of the encoded media content item.

Based on metadata corresponding to one or more lower resolution versions of an encoded media content item, the prediction engine 100 may predict an optimized bitrate and/or other encoding settings for encoding the media content item at a higher resolution. This process may continue for numerous resolutions to obtain, at each resolution, a version of the encoded media content item that is generated at an optimized bitrate (and/or other optimized encoding settings) corresponding to optimized quality. These versions, collectively, may form a bitrate ladder for the media content item and may be stored in the storage device 102 for subsequent download to different types of user devices.

The prediction engine 100 may, based on metadata received, instruct the encoders 101a-101c to use new encoding settings. The new encoding settings need not follow a particular pattern and need not be increasing: in other words, the prediction engine 100 need not merely increment the encoding settings. The prediction engine 100 may determine new encoding settings based on determining whether the combination of higher resolution and lower bitrate (and/or other changed encoding settings) may provide an optimized encoded media content item as compared to simply a higher bitrate in view of considerations such as, for example, bandwidth requirements.

Encoded media content items stored in the storage device 102 need not be the highest quality versions of the media content item. For example, an optimized version of media content item at 720p may be a version which has a bitrate which provides good video quality but which will not consume excessive bandwidth when streamed. As such, the prediction engine 100 may weigh a variety of factors in determining whether to store an encoded media content item, such as available storage space, and/or strategies for adaptive streaming. For example, the prediction engine 100 may cause the encoders to store encoded versions of media content items with a low bitrate such that a version of the media content items may be loaded by a viewer even under poor network conditions.

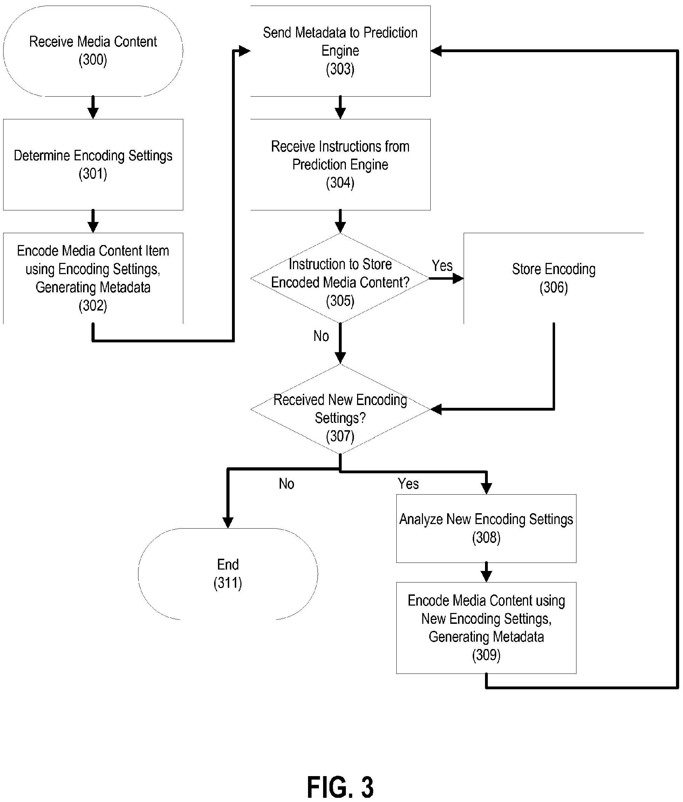

FIG. 3 is a flow chart showing steps which may be performed by a single encoder communicatively coupled to a prediction engine. In some examples, such as the example discussed above, a different encoder may be used in connection with generating versions of an encoded media content item, and associated metadata, at a particular resolution. As to some such examples, the details of one or more steps in FIG. 3 may vary depending on what part of a bitrate ladder (e.g., the resolution/encoding setting combination) the encoder will generate. In some examples, a single encoder may perform operations shown in FIG. 3 in connection with multiple resolutions. For example, an encoder may generate a version of an encoded media content item at a first resolution. That encoder may then receive, from the prediction engine 100 and based on metadata associated with that first resolution version, instructions to generate a version of the encoded media content item at a higher resolution. This may continue for increasingly higher resolutions.

In step 300, an encoder may receive a media content item. Receipt of the media content item may comprise determining a location of media content item and retrieving the media content item (e.g., from a server). Receipt of the media content item may additionally or alternatively comprise loading a media content item into memory, such as long-term or temporary storage. The media content item may be in any format which may be encoded by the encoder. For example, receiving the media content item may comprise receiving an entire media file (e.g., an entire television show) and splitting the media file into discrete segments (e.g., for every five seconds and/or on a scene-by-scene basis).

In step 301, the encoder may determine encoding settings corresponding to the media content item. In some examples, and if step 301 is being performed by an encoder for the lowest resolution in a bitrate ladder (e.g., the encoder 101a), determining the encoding settings may comprise referring to default or other pre-set starting encoding settings. Default or preset encoding settings may be based on target devices and/or networks. For example, if a content delivery network supports older smartphones with 480p screens incapable of displaying video over 3 Mbps, then the starting encoding settings may cause encoding of 480p/3 Mbps video.

Starting encoding settings may vary based on the media content item. Different starting encoding settings may exist based on a category of the media content item (e.g., the genre of the media content item), length of the media content, type of media content item (e.g., movie, television show), and/or popularity of the media content item. For example, the starting encoding settings for a feature film may be higher than for an older television show. As another example, the starting encoding settings may be based on a popularity of the media content item: a low-popularity show may be associated with very low starting encoding settings such that a low bitrate version of the media content item may be stored. It may be desirable in some examples to use a relatively high starting encoding setting.

If step 301 is being performed by an encoder associated with a resolution that is not at the bottom of a bitrate ladder (e.g., the encoders 101b and 101c), determining encoding settings may comprise receiving the encoding sittings from the prediction engine 100. The received encoding settings may comprise a bitrate and/or other encoding settings that have been predicted by the prediction engine 100 based on metadata from one or more encodings at one or more lower resolutions.

In step 302, the encoder may encode the media content item using the encoding settings determined in step 301. A version of the encoded media content item generated in step 302 may be buffered pending a decision (by the prediction engine 100) to store that version or to encode the media content item at the same resolution but at a different bitrate and/or other different encoding settings. As part of step 302, the encoder may generate metadata corresponding to the version of the encoded media content item created based on the settings from step 301. The metadata may be any output provided by the encoding process and may depend significantly on the encoding process performed. For example, some encoding processes may provide a PSNR value corresponding to all or part of a frame or portion of the media content item; however, others may not. Metadata may also comprise information determined by the encoder based on analysis of the encoded media content item after encoding. For example, an encoder may encode, into a file, the media content item, and then analyze the file to determine a file size.

In step 303, the encoder may send metadata corresponding to an encoded media content item to the prediction engine 100. Sending metadata to the prediction engine 100 may include transmitting metadata over a network or allowing the prediction engine 100 to access the metadata in memory. The metadata sent to the prediction engine 100 need not comprise all metadata from step 302. For example, the encoder may only send to the prediction engine 100 metadata known to be material in determining new encoding settings.

In step 304, the encoder may receive, from the prediction engine 100, instructions based on the metadata sent in step 303. Such instructions may include an instruction on whether to store the version of the encoded media content item and/or whether to encode the media content item using different encoding settings. For example, the prediction engine 100 may instruct the encoder to encode the media content item at a different resolution and/or a different bitrate and/or other different encoding settings.

In step 305, the encoder may receive an instruction from the prediction engine 100 indicating whether to store the generated version of the encoded media content item from step 302.

If the encoder received an instruction from the prediction engine 100 in step 305 to store the generated version of the encoded media content item from step 302, the encoder may, in step 306, cause the generated version of the encoded media content item to be stored in the storage device 102. Storage may include retaining an encoded media content item in long-term memory, such as by moving the encoded media content item from short-term memory to a hard drive and/or other long-term storage media. The encoded media content item may, for example, be transmitted over a communication network to a storage server. As such, an encoded media content item need not be stored at the encoder, but may be stored elsewhere, such as on a remote server. From step 306, the encoder may proceed to step 307.

If the encoder did not receive an instruction from the prediction engine 100 in step 305 to store the encoded media content item, the encoder may proceed to step 307 directly from step 305.

In step 307, the encoder may determine if new encoding settings were received from the prediction engine in step 305. If new encoding settings were not received in step 305, the encoder may cease encoding the media content item and proceed from step 307 to step 311. This path to step 311 may correspond to reaching step 307 from step 306 after storing a version of the encoded media content item.

If the encoder did receive instructions from the prediction engine 100 in step 305 to encode the media content item at different settings (e.g., at a different bitrate), the encoder may proceed from step 307 to step 308. In step 308, the encoder may analyze new encoding settings received from the prediction engine 100 in step 305. Such analysis may comprise, for example, determining which encoding settings may be used by software executing on the encoder. The new encoding settings may be new, but need not be higher quality than previous settings. For example, the prediction engine may have previously provided encoding settings which resulted in an unacceptably large file size such that subsequent encoding settings may comprise a lower average bitrate and/or other lower encoding setting.

In step 309, the encoder may encode the media content item using the new encoding settings and generate a second encoded version of the media content item. As part of step 309, the encoder may generate metadata associated with that second encoded version of the media content item. From step 309, the encoder may return to step 303.

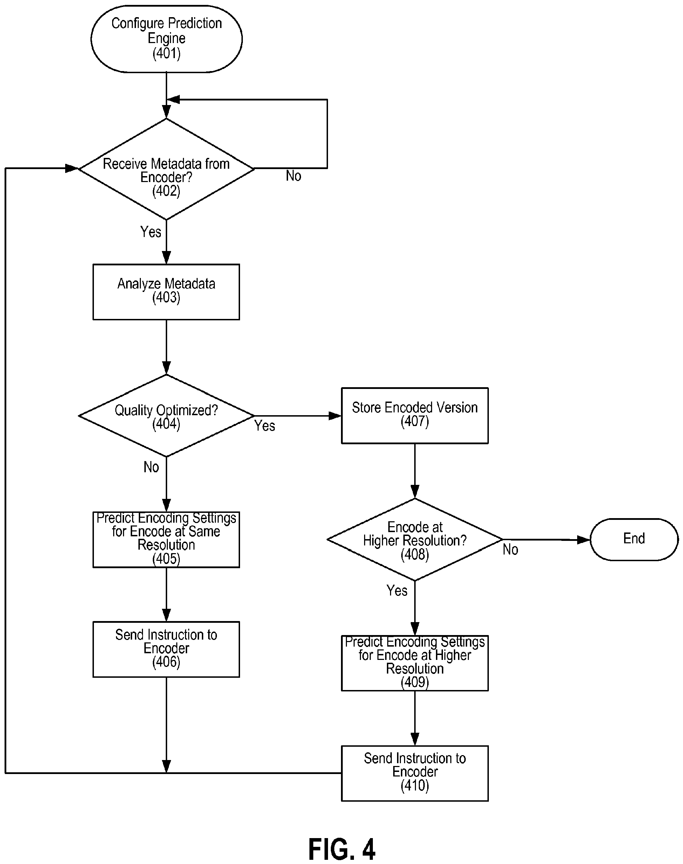

FIG. 4 is a flow chart of an example process which may be performed by the prediction engine 100. In step 401, the prediction engine 100 may be configured. Configuration may include determining parameters for encoding settings, such as a plurality of available bitrates and/or other available encoding settings for each of a plurality of resolutions.

In step 402, the prediction engine 100 may determine if it has received metadata from an encoder. If not, and as indicated by the "No" branch, the prediction engine repeats step 402 until metadata is received. If the prediction engine 100 determines in step 402 that it has received metadata, the prediction engine 100 proceeds to step 403.

The prediction engine 100 may analyze the received metadata in step 403. In some examples, the analysis of step 403 may comprise determining whether a quality of an encoded media content item corresponding to the received metadata is optimized. In some examples, this determination may comprise a determination that the quality is too low and that the media content item should be encoded again at the current resolution, but at a higher bit rate and/or at one or more other adjusted encoding settings. Determining that the quality is too low may comprise determining that one or more quality-indicating parameters has a value below a predefined threshold for a particular type of content. As but on example, PSNR values of T1 or higher may correlate with a minimum acceptable quality level. If the metadata received in step 402 indicates a PSNR below T1, the prediction engine 100 may determine that the media content item corresponding to that metadata should be encoded at the same resolution but at a higher bit rate and/or at one or more other adjusted encoding settings.

Determining whether a quality of an encoded media content item corresponding to the received metadata is optimized may additionally or alternatively comprise a determination that that the quality is very high, which determination may suggest that encoding at a lower bitrate and/or at one or more other adjusted encoding settings may be appropriate. For example, increased values of PSNR above a certain threshold T2 may only represent minor quality improvements that are imperceptible to many viewers. Moreover, obtaining increases in PSNR above T2 may require greater increases in bitrate than are needed for similar increases in PSNR below T2. If the metadata received in step 402 indicates a PSNR above T2, the prediction engine 100 may determine that the media content item corresponding to that metadata should be encoded at the same resolution but at a lower bit rate.

In step 404, the prediction engine 100 may determine, based on the analyses of step 403, whether the quality of the encoded media content item corresponding to the received metadata is optimized. If the quality is not optimized, the prediction engine 100 may proceed to step 405. In step 405, the prediction engine may determine another bitrate and/or one or more other encoding settings for encoding the media content item at the current resolution. If the quality was too low, the prediction engine 100 may select the next highest bitrate, and/or may adjust QP and/or CRF values and/or other encoding settings to increase quality. If the quality was very high, the prediction engine 100 may select the next lowest bitrate, and/or may adjust QP and/or CRF values and/or other encoding settings to reduce quality.

In step 406, the prediction engine 100 may send, to an encoder, an instruction comprising the predicted new encoding settings from step 405. The prediction engine 100 may then return to step 402 and await receipt of metadata from the encoder relating to the encoding at the new encoding settings.

If the prediction engine determines in step 404 that, based on the analyses of step 403, the quality of the encoded media content item is optimized, the prediction engine 100 proceeds to step 407. In step 407, the prediction engine 100 may cause that encoded media content item to be stored. Step 407 may comprise sending, to an encoder, an instruction to store the encoded media content item. Such instruction may comprise an indication of where to store the encoded media content item.

In step 408, the prediction engine 100 may determine whether the media content item should be encoded at a higher resolution. The prediction engine 100 may determine to encode at a higher resolution based on determining, in step 401, a plurality of resolutions at which to encode a media content item. If the version of the encoded media content item stored in step 408 was at a resolution lower than the highest resolution of the plurality of resolutions from the configuration, then encoding at a higher resolution may be performed. If the prediction engine 100 determines that encoding at a higher resolution should not be performed, and as indicated by the "No" branch, the process may end. If the prediction engine 100 determines that encoding at a higher resolution should be performed, the prediction engine 100 may proceed to step 409.

In step 409, the prediction engine 100 may predict a bitrate and/or other encoding settings for encoding at the higher resolution. The prediction engine 100 need not simply pick the lowest available bitrate or other encoding setting. Instead, the prediction engine 100 may determine a bitrate and/or other encoding setting(s) likely to result in an optimized quality. The prediction engine 100 may determine that bitrate and/or other encoding setting(s) based on one or more of the analyses, performed in step 403, of the metadata corresponding to the encoded media content item for which an instruction to store was just sent in step 407. The prediction in step 409 may also be based on metadata for one or more other previous encodings of the same media content item. Such other previous encodings may include encodings that were at the same resolution as the version just stored in step 407, but that were encoded using different bitrates and/or other encoding settings. Such other previous encodings may also or alternatively include encodings at even lower resolutions.

Prediction of a new encoding setting in step 409 may be performed in various ways. The prediction of step 409 may be based on historical results corresponding to the same or different media content items. The prediction engine 100 may learn over time prediction strategies and methods which may improve its ability to determine new encoding settings. The prediction engine 100 may use a history of metadata from other media content items to determine a metadata trend or similar correlation associated with metadata and, based on such a metadata trend, predict a new encoding setting. The prediction engine 100 may comprise or be communicatively coupled with a neural network to facilitate such learning. Prediction of new encoding settings may be based on characteristics of a media content item. Such characteristics may include a popularity of the media content item, a genre of the media content item, a total length of the media content item, or other such information. For example, a daytime television show may cause the prediction engine 100 to predict different new encoding settings than a feature film.

In step 410, the prediction engine 100 may send an instruction to an encoder indicating the new encoding settings. The instruction may be similar in form to that of step 406. The prediction engine 100 may then return back to step 402 and await receipt of metadata from the encoder.

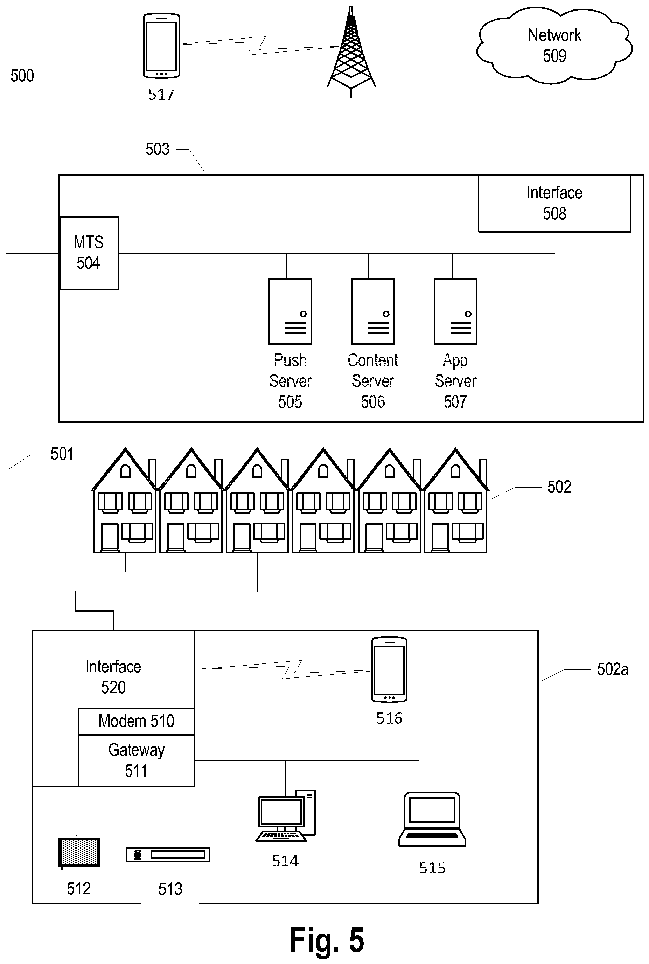

FIG. 5 shows a communication network 500 on which one or more of the features described herein may be implemented. For example, one or more servers (e.g., content server 506 and/or app server 507) may be configured to act as an encoding device, e.g., by executing one or more encoders for encoding media content items and/or performing other encoder operations. One or more servers (e.g., content server 506 and/or app server 507) may be configured to execute the prediction engine 100. The communication network 500 may be configured to transmit media content items from a media source 103 (not shown) located in the network 500 to encoders executing on one or more of servers 505-507. Content server 503 may be comprise the storage device 102, and/or the storage device 102 may be located elsewhere in the network 500. Features described herein may be implemented on the communication network 500 in order to, for example, allow the prediction engine 100 to manage numerous encoders distributed across a larger network.

Encoded versions of media content items may be sent over the communications network 500 to a premises and reproduced on, for example, one or more user devices located within an example premises 502a. Examples of user devices in the premises 502a include a laptop computer 515, a mobile device (e.g., a smart phone or tablet) 516, a display 512, and a computer 514.

The network 500 may be any type of information distribution network, such as satellite, telephone, cellular, wireless, etc. One example may be an optical fiber network, a coaxial cable network, or a hybrid fiber/coax distribution network. Such networks 500 use a series of interconnected communication links 501 (e.g., coaxial cables, optical fibers, wireless, etc.) to connect multiple premises 502 (e.g., businesses, homes, consumer dwellings, etc.) to a local office or local office 503. The local office 503 may send downstream information signals via the links 501, and each premises 502 may have a receiver used to receive and process those signals.

There may be one link 501 originating from a local office 503, and it may be split a number of times to distribute the signal to various premises 502 in the vicinity (which may be many miles) of the local office 503. The links 501 may include components not shown, such as splitters, filters, amplifiers, etc. to help convey the signal clearly. Portions of the links 501 may also be implemented with fiber-optic cable, while other portions may be implemented with coaxial cable, other lines, or wireless communication paths.

The local office 503 may include an interface, such as a termination system (TS) 504. More specifically, the interface 504 may be a cable modem termination system (CMTS), which may be one or more computing devices configured to manage communications between devices on the network of links 501 and backend devices such as the servers 505-503. The interface 504 may be as specified in a standard, such as the Data Over Cable Service Interface Specification ("DOCSIS") standard, published by Cable Television Laboratories, Inc. (a.k.a. CableLabs), or it may be a similar or modified device instead. The interface 504 may be configured to place data on one or more downstream frequencies to be received by modems at the various premises 502, and to receive upstream communications from those modems on one or more upstream frequencies.

The local office 503 may also include one or more interfaces 508, which can permit the local office 503 to communicate with various other external networks 509. These networks 509 may include, for example, networks of Internet devices, telephone networks, cellular telephone networks, fiber optic networks, local wireless networks (e.g., WiMAX), satellite networks, and any other desired network, and the network interface 508 may include the corresponding circuitry needed to communicate on the external networks 509, and to other devices on the network such as a cellular telephone network and its corresponding cell phones.

The local office 503 may include a variety of servers 505-503 that may be configured to perform various functions. For example, the local office 503 may include a push notification server 505. The push notification server 505 may generate push notifications to deliver data and/or commands to the various premises 502 in the network (e.g., to the devices in the premises 502 that are configured to detect such notifications). The local office 503 may also include a content server 506. The content server 506 may be one or more computing devices that are configured to provide content to users at their premises. This content may be, for example, video on demand movies, television programs, songs, text listings, etc. The content server 506 may include software to validate user identities and entitlements, to locate and retrieve requested content, to encrypt the content, and to initiate delivery (e.g., streaming) of the content to the requesting user(s) and/or device(s).

The local office 503 may also include one or more application servers 503. An application server 503 may be one or more computing devices configured to offer any desired service, and may run various languages and operating systems. For example, an application server may be responsible for collecting television program listings information and generating a data download for electronic program guide listings. Another application server may be responsible for monitoring user viewing habits and collecting that information for use in selecting advertisements. Yet another application server may be responsible for formatting and inserting advertisements in a video stream being transmitted to the premises 502. Although shown separately, the push server 505, content server 506, and application server 503 may be combined. Although the push server 505, content server 506, and application server 503 are shown generally, and it will be understood that they may each contain memory storing computer executable instructions to cause a processor to perform steps described herein and/or memory for storing data. Alternate and/or additional servers may be included in local office 503 or elsewhere in the network 500.

The example premises 502a, such as a home, may include an interface 520. Although only one interface is shown in FIG. 5, a plurality of interfaces may be implemented. The interface 520 can include any communication circuitry needed to allow a device to communicate on one or more links 501 with other devices in the network. For example, the interface 520 may include a modem 510, which may include transmitters and receivers used to communicate on the links 501 and with the local office 503. The modem 510 may be, for example, a coaxial cable modem (for coaxial cable lines 501), a fiber interface node (for fiber optic lines 501), twisted-pair telephone modem, cellular telephone transceiver, satellite transceiver, local WiFi router or access point, or any other desired modem device. Also, although only one modem is shown in FIG. 5, a plurality of modems operating in parallel may be implemented within the interface 520. Further, the interface 520 may include a gateway interface device 511. The modem 510 may be connected to, or be a part of, the gateway interface device 511. The gateway interface device 511 may be one or more computing devices that communicate with the modem(s) 510 to allow one or more other devices in the premises 502a, to communicate with the local office 503 and other devices beyond the local office 503. The gateway 511 may comprise a set-top box (STB), digital video recorder ("DVR"), computer server, or any other desired computing device. The gateway 511 may also include (not shown) local network interfaces to provide communication signals to requesting entities/devices in the premises 502a, such as display devices 512 (e.g., televisions), additional STBs or DVRs 513, personal computers 514, laptop computers 515, wireless devices 516 (e.g., wireless routers, wireless laptops, notebooks, tablets and netbooks, cordless phones (e.g., Digital Enhanced Cordless Telephone-DECT phones), mobile phones, mobile televisions, personal digital assistants ("PDA"), etc.), landline phones 517 (e.g., Voice over Internet Protocol-VoIP phones), and any other desired devices. Examples of the local network interfaces include Multimedia Over Coax Alliance ("MoCA") interfaces, Ethernet interfaces, universal serial bus ("USB") interfaces, wireless interfaces (e.g., IEEE 802.11, IEEE 802.15), analog twisted pair interfaces, Bluetooth interfaces, and others.

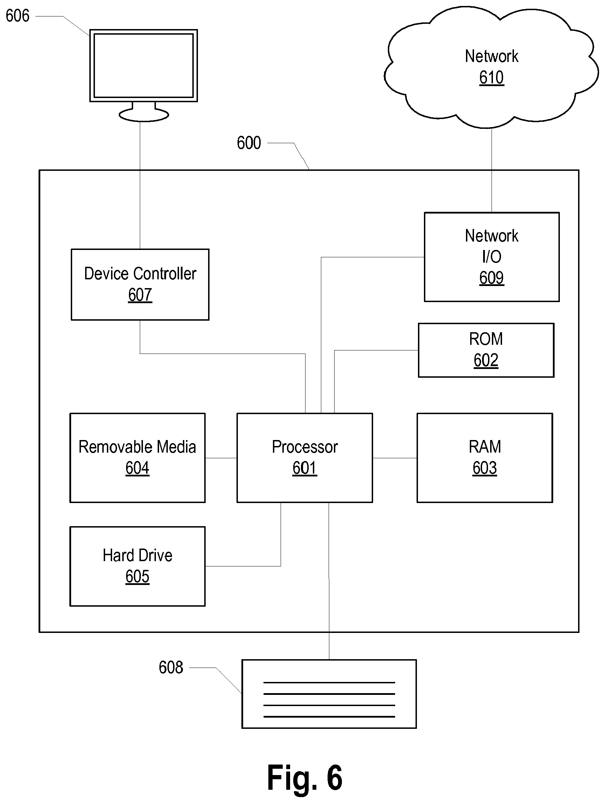

FIG. 6 is a block diagram showing hardware elements of an example computing device 600. Such an example computing device could perform operations of an encoder and/or of a prediction engine. For example, a computing device such as the example computing device 600 may include one or more processors that execute instructions (stored in a memory) that cause the computing device to perform one or more of the operations of an encoder (e.g., one or more of the encoders 103a-103c). As another example, a computing device such as the example computing device 600 may include one or more processors that execute instructions (stored in a memory) that cause the computing device to perform one or more of the operations of a prediction engine (e.g., the prediction engine 100). In some examples, a computing device such as is described herein may omit one or more of the elements shown in FIG. 6.

The computing device 600 may include one or more processors 601, which may execute instructions of a computer program to perform any of the features described herein. The instructions may be stored in any type of computer-readable medium or memory, to configure the operation of the processor 601. For example, instructions may be stored in a read-only memory ("ROM") 602, a random access memory ("RAM") 603, a removable media 604, such as a Universal Serial Bus ("USB") drive, compact disk ("CD") or digital versatile disk ("DVD"), a floppy disk drive, or any other desired storage medium. Instructions may also be stored in an attached (or internal) hard drive 605. The computing device 600 may include one or more output devices, such as a display 606 (e.g., an external television), and may include one or more output device controllers 607, such as a video processor. There may also be one or more user input devices 608, such as a remote control, keyboard, mouse, touch screen, microphone, camera input for user gestures, etc. The computing device 600 may also include one or more network interfaces, such as a network input/output (I/O) circuit 609 (e.g., a network card) to communicate with an external network 610. The network input/output circuit 609 may be a wired interface, wireless interface, or a combination of the two. The network input/output circuit 609 may include a modem (e.g., a cable modem), and the external network 610 may include the communication links 501 discussed above, the external network 509, an in-home network, a provider's wireless, coaxial, fiber, or hybrid fiber/coaxial distribution system (e.g., a DOCSIS network), or any other desired network. Additionally, the device may include a location-detecting device, such as a global positioning system (GPS) microprocessor 611, which can be configured to receive and process global positioning signals and determine, with possible assistance from an external server and antenna, a geographic position of the device.

The FIG. 6 example is a hardware configuration, although the components may be wholly or partially implemented as software as well. Modifications may be made to add, remove, combine, divide, etc. components of the computing device 600 as desired. Additionally, the components may be implemented using basic computing devices and components, and the same components (e.g., processor 601, ROM storage 602, display 606, etc.) may be used to implement any of the other computing devices and components described herein. For example, the various components herein may be implemented using computing devices having components such as a processor executing computer-executable instructions stored on a computer-readable medium, as shown in FIG. 6. Some or all of the entities described herein may be software based, and may coexist in a common physical platform (e.g., a requesting entity can be a separate software process and program from a dependent entity, both of which may be executed as software on a common computing device).

One or more features may be embodied in a computer-usable data and/or computer-executable instructions, such as in one or more program modules, executed by one or more computers or other devices. Program modules may include routines, programs, objects, components, data structures, etc. that perform particular tasks or implement particular abstract data types when executed by a processor in a computer or other data processing device. The computer executable instructions may be stored on one or more computer readable media such as a hard disk, optical disk, removable storage media, solid state memory, RAM, etc. The functionality of the program modules may be combined or distributed. In addition, the functionality may be embodied in whole or in part in firmware or hardware equivalents such as integrated circuits and/or field programmable gate arrays ("FPGA"). Particular data structures may be used to more effectively implement one or more features of the disclosure, and such data structures are contemplated within the scope of computer executable instructions and computer-usable data described herein.

Features of the disclosure have been described in terms of examples. While example systems, apparatuses, and methods embodying various features of the present disclosure are shown, it will be understood that the disclosure is not limited to these examples or features. Modifications may be made. Each of the features of the aforementioned examples may be utilized alone or in combination or sub-combination with elements of other examples. Any of the above described systems and methods or parts thereof may be combined with the other methods and systems or parts thereof described above. The steps shown in the figures may be performed in other than the recited order, and one or more steps shown may be optional. These and other modifications may be made without departing from the spirit and scope of the present disclosure. The description and drawings are thus to be regarded as examples instead of restrictive on the present disclosure.

Hereinafter, various characteristics of various embodiments of the invention will be highlighted in a set of numbered examples. These characteristics are not to be interpreted as being limiting on the invention or inventive concept, but are provided merely as a highlighting of some characteristics of the invention as described in the description, without suggesting a particular order of importance or relevancy of such characteristics. The invention is only limited by the appended claims presented in the correspondingly named section. The embodiments include:

### Examples

1. An example comprising:
   receiving, by a computing device, metadata, wherein the metadata is indicative of encoding of a media content item at a first resolution and a first encoding setting;
   determining, based on the metadata and from a plurality of possible encoding settings, a second encoding setting for encoding the media content item at a second resolution, wherein the second resolution is higher than the first resolution; and
   sending, to an encoder, the second encoding setting for encoding of the media content item at the second resolution.
2. The method of example 1, wherein the first encoding setting is a first bitrate and the second encoding setting is a second bitrate, and wherein the second bitrate is different from the first bitrate.
3. The method of example 1, wherein the first encoding setting is a first quantization parameter (QP) value and the second encoding setting is a second QP value, and wherein the second QP value is different from the first QP value.
4. The method of example 1, wherein the first encoding setting is a first constant rate factor (CRF) value and the second encoding setting is a second CRF value, and wherein the second CRF value is different from the first CRF value.
5. The method of example 1, wherein the first encoding setting comprises one or more of a bitrate, a quantization parameter (QP) value, or a constant rate factor (CRF) value, and wherein the second encoding setting comprises one or more of a bitrate, a QP value, or a CRF value.
6. The method of example 1, further comprising:
   receiving second metadata, wherein the second metadata is indicative of encoding of the media content item at the second resolution and the second encoding setting;
   determining, based on the second metadata, a third encoding setting from the plurality of possible encoding settings for encoding the media content item at the second resolution; and
   sending the third encoding setting for encoding the media content item at the second resolution.
7. The method of example 6, further comprising:
   determining, based on the second metadata, that a quality of the media content item encoded at the second resolution and the second encoding setting is not optimized.
8. The method of example 7, wherein determining that the quality of the media content item encoded at the second resolution and the second encoding setting is not optimized comprises determining that the media content item should be encoded at the second resolution and at a bitrate higher than a bitrate associated with the second encoding setting.
9. The method of example 7, wherein determining that the quality of the media content item encoded at the second resolution and the second encoding setting is not optimized comprises determining that one or more quality-indicating parameters of the second metadata have values below a threshold.
10. The method of example 7, wherein determining that the quality of the media content item encoded at the second resolution and the second encoding setting is not optimized comprises determining that the media content item should be encoded at the second resolution and at a bitrate lower than a bitrate associated with the second encoding setting.
11. The method of example 7, wherein determining that the quality of the media content item encoded at the second resolution and the second encoding setting is not optimized comprises determining that one or more quality-indicating parameters of the second metadata have values above a threshold.
12. The method of example 1, further comprising:
   receiving second metadata, wherein the second metadata is indicative of encoding of the media content item at the second resolution and the second encoding setting;
   determining, based on the second metadata, a third encoding setting from the plurality of possible encoding settings for encoding the media content item at a third resolution, wherein the third resolution is higher than the second resolution; and
   sending the third encoding setting for encoding the media content item at the third resolution.
13. The method of example 1, wherein the plurality of possible encoding settings is a series of predefined discrete bitrate values.
14. The method of example 1, further comprising:
   receiving second metadata, wherein the second metadata is indicative of encoding of the media content item at the second resolution and the second encoding setting;
   determining, based on a history of metadata, a metadata trend, wherein the history of metadata is indicative of encoding of a second media content item;
   determining, based on the second metadata and the metadata trend, a third encoding setting from the plurality of possible encoding settings for encoding the media content item at the second resolution; and
   sending the third encoding setting for encoding the media content item at the second resolution.
15. An example comprising:
   receiving, by a computing device, metadata, wherein the metadata is indicative of encoding of a media content item at a first resolution and a first encoding setting;
   determining, based on the metadata, that a quality of the media content item encoded at the first resolution and the first encoding setting is optimized;
   determining, based on the quality of the media content item encoded at the first resolution and the first encoding setting being optimized, to encode the media content item at a second resolution, wherein the second resolution is higher than the first resolution; and
   determining, based on determining to encode the media content item at the second resolution, and based on the metadata, a second encoding setting for encoding of the media content item at the second resolution.
16. The method of example 15, wherein determining that the quality of the media content item encoded at the first resolution and the first encoding setting is optimized comprises determining that one or more quality-indicating parameters of the metadata have values above a threshold.
17. The method of example 15, further comprising:
   receiving second metadata, wherein the second metadata is indicative of encoding of the media content item at the second resolution and the second encoding setting; and
   determining, based on the second metadata, a third encoding setting from the plurality of possible encoding settings for encoding the media content item at a third resolution, wherein the third resolution is higher than the second resolution.
18. An example comprising:
   one or more processors; and
   memory storing instructions that, when executed by the one or more processors, cause the apparatus to:
      receive metadata, wherein the metadata is indicative of encoding of a media content item at a first resolution and a first encoding setting;
      determine, based on the metadata and from a plurality of possible encoding settings, a second encoding setting for encoding the media content item at a second resolution, wherein the second resolution is higher than the first resolution; and
      send, to an encoder, the second encoding setting for encoding of the media content item at the second resolution.
19. The apparatus of example 18, wherein the instructions, when executed by the one or more processors, further cause the apparatus to:
   receive second metadata, wherein the second metadata is indicative of encoding of the media content item at the second resolution and the second encoding setting;
   determine, based on the second metadata, a third encoding setting from the plurality of possible encoding settings for encoding the media content item at the second resolution; and
   send the third encoding setting for encoding the media content item at the second resolution.
20. The apparatus of example 19, wherein the instructions, when executed by the one or more processors, further cause the apparatus to:
   determine, based on the second metadata, that a quality of the media content item encoded at the second resolution and the second encoding setting is not optimized.
21. The apparatus of example 20, wherein the instructions, when executed by the one or more processors, cause the apparatus to determine the quality of the media content item encoded at the second resolution and the second encoding setting is not optimized by determining that the media content item should be encoded at the second resolution and at a bitrate higher than a bitrate associated with the second encoding setting.
22. The apparatus of example 20, wherein the instructions, when executed by the one or more processors, cause the apparatus to determine the quality of the media content item encoded at the second resolution and the second encoding setting is not optimized by determining that one or more quality-indicating parameters of the second metadata have values below a threshold.
23. The apparatus of example 20, wherein the instructions, when executed by the one or more processors, cause the apparatus to determine a quality of the media content item encoded at the second resolution and the second encoding setting is not optimized by determining that the media content item should be encoded at the second resolution and at a bitrate lower than a bitrate associated with the second encoding setting.
24. The apparatus of example 20, wherein the instructions, when executed by the one or more processors, cause the apparatus to determine the quality of the media content item encoded at the second resolution and the second encoding setting is not optimized by determining that one or more quality-indicating parameters of the second metadata have values above a threshold.

## Claims

1. A method comprising:
receiving, by a computing device (600), metadata (203a-203b) indicative of encoding of a media content item at a first resolution and a first bitrate;
determining, based on the metadata, a second bitrate for encoding the media content item at a second resolution, wherein the second resolution is the same or higher than the first resolution; and
sending, to an encoder (101a-101c), an indication of the determined second bitrate for encoding of the media content item at the second resolution.

2. The method of claim 1, further comprising:
determining, based on second metadata indicative of encoding of the media content item at the second resolution and the second bitrate, a third bitrate for encoding the media content item at the second resolution; and
sending an indication of the determined third bitrate for encoding the media content item at the second resolution.

3. The method of claim 1, further comprising:
determining, based on second metadata indicative of encoding of the media content item at the second resolution and the second bitrate, that a quality of the media content item encoded at the second resolution and the second bitrate is not optimized; and
sending, based on the determining that the quality is not optimized, an indication of a higher bitrate for encoding the media content item at the second resolution.

4. The method of claim 1, further comprising:
determining, based on second metadata indicative of encoding of the media content item at the second resolution and the second bitrate, that a quality of the media content item encoded at the second resolution and the second bitrate is optimized; and
sending, based on the determining that the quality is optimized, an indication of a new bitrate for encoding the media content item at a third resolution higher than the second resolution.

5. The method of claim 1, further comprising:
determining, based on second metadata indicative of encoding of the media content item at the second resolution and the second bitrate, that a quality of the media content item encoded at the second resolution and the second bitrate is not optimized; and
sending, based on the determining that the quality is not optimized, an indication of a lower bitrate for encoding the media content item at the second resolution.

6. The method of claim 1, further comprising:
determining, based on second metadata indicative of encoding of the media content item at the second resolution and the second bitrate, a third bitrate for encoding the media content item at a third resolution higher than the second resolution; and
sending the determined third bitrate for encoding the media content item at the third resolution.

7. The method of claim 1, further comprising:
determining, based on second metadata indicative of encoding of the media content item at the second resolution and the second bitrate, that a quality of the media content item encoded at the second resolution and the second bitrate is not optimized; and
sending, based on the determining that the quality is not optimized, an indication of a lower frame rate for encoding the media content item at the second resolution.

8. The method of claim 1, further comprising:
determining, based on a history of metadata from encodings of a second media content item, a metadata trend;
determining, based on the metadata trend and on second metadata indicative of encoding of the media content item at the second resolution and the second bitrate, a third bitrate for encoding the media content item at the second resolution; and
sending an indication of the determined third bitrate for encoding the media content item at the second resolution.

9. The method of claim 1, wherein determining the second bitrate is based on determining that a quality of the media content item encoded at the first resolution and the first bitrate is optimized.

10. The method of any one of claims 1-9, further comprising:
sending, to a second encoder different from the encoder, and based on second metadata indicative of encoding of the media content item at the second resolution and the second bitrate, an indication to encode the media content item.

11. The method of any one of claims 1-10, further comprising:
determining, based on the metadata, a frame rate for encoding the media content item at the second resolution; and
sending, to the encoder, an indication of the frame rate for encoding the media content item at the second resolution.

12. The method of claim 11, wherein the determined frame rate is lower than a second frame rate associated with the media content item encoded at the first resolution and the first bitrate.

13. A non-transitory computer-readable medium storing instructions that, when executed by a computing device (600), cause the computing device to perform the method of any one of claims 1-12.

14. A computing device (600), configured to perform the method of any one of claims 1-12.

15. A system comprising:
a computing device (600), configured to perform the method of any one of claims 1-12; and
an encoder (101a-101c), configured to encode the media content.
